# EUROPEAN PATENT SPECIFICATION

(11) **EP 4 555 272 B1**
(45) Date of publication and mention of the grant of the patent: **09.12.2026**
(21) Application number: 23800947.6
(22) Date of filing: 02.10.2023
(51) Int. Cl.: G01B 11/24

(54) **METHOD AND APPARATUS FOR CREATING A THREE-DIMENSIONAL REPRESENTATION OF AN OBJECT AND USE OF SAID APPARATUS**
VERFAHREN UND VORRICHTUNG ZUR ERZEUGUNG EINER DREIDIMENSIONALEN DARSTELLUNG EINES OBJEKTS UND VERWENDUNG DIESER VORRICHTUNG
PROCÉDÉ ET APPAREIL DE CRÉATION D'UNE REPRÉSENTATION TRIDIMENSIONNELLE D'UN OBJET ET UTILISATION DE CET APPAREIL

(43) Date of publication of application: 21.05.2025
(73) Proprietor: Stavroulakis, Petros Ioannis, Glyfada, 16674, Attiki (GR)
(72) Inventor:
(74) Representative: Araujo, Daniel
(86) International application number: PCT/GR2023/000051
(87) International publication number: WO 2025/074127

(56) References cited:
- US-A1- 2012 170 049
- US-A1- 2021 033 489
- WU BOJIAN ET AL: "Full 3D reconstruction of transparent objects", ACM TRANSACTIONS ON GRAPHICS, ACM, NY, US, vol. 37, no. 4, 30 July 2018 (2018-07-30), pages 1 - 11, XP058686284, ISSN: 0730-0301, DOI: 10.1145/3197517.3201286

## Description

### Technical Field

The present disclosure concerns a method for creating a three-dimensional representation of an object. Parts of the method may be implemented with a computer, and the representation of the object may be a digital representation, image or model of the object. The present disclosure also concerns an apparatus for creating a three-dimensional representation of an object. The apparatus may be a system or device. Also, the apparatus may be used for implementing the method. The present disclosure further concerns particular uses of the method or of the apparatus.

### Background

There are known methods for creating three-dimensional representations i.e., three-dimensional images or models of real objects. Such a 3D representation may be a digital optical computed tomography representation created with the aid of a combination of photographic and computer equipment used for capturing 2D images of the object and processing the 2D images for creating the 3D optical computed tomography representation of the object. Optical tomography can be considered as a type of computed tomography that creates a digital volumetric model of an object by reconstructing images made from light transmitted and/or reflected or scattered through the object. Another type of computed tomography is the X-ray computed tomography which is a well-known technique. The creation of three dimensional (3D) representations of real objects is particularly useful in many industrial and academic sectors. For example, archaeologists or other experts may need to create and record 3D digital images or models of objects of archaeological or cultural importance. Likewise, in the industrial production of consumables, for quality monitoring purposes it may be required to create and record 3D digital images or models of samples.

In the aforementioned sectors, as well as in others, the object of which a 3D digital representation has to be created, is often translucent or transparent. Creating a 3D optical computed tomography representation of a translucent or transparent object via means of a method that involves taking images of the object, and processing said images for creating the 3D representation, may be a particularly challenging task because the object's transparency or translucency may cause the occurrence of optical effects which can impede the creation of an accurate 3D representation of the object. In particular, the possible refraction of light propagating through the translucent or transparent object, and/or the possible reflection of light by the object, may result to the creation of a distorted 3D image or model which does not represent accurately the real shape and form of the object.

For addressing the above problem, conventional optical tomography approaches applied to objects which are translucent or transparent, involve either covering the object with a compound or powder that reduces the transparency of the object and results to a stronger scattering and/or absorption of light, or involve immersing the object in a liquid medium that matches the refractive index of the object's solid material and reduces the refraction of light. Hence, said conventional methods do not directly solve the challenges created by the reflection and refraction of the light, but instead they try to bypass the problem by avoiding having said reflection or refraction. Nevertheless, these conventional methods are not particularly attractive because the covering the object with a foreign light absorbing or scattering substance, or immersing the object in an index matching medium adds complexity to the overall process, may be impractical, and may even not be permissible. For example, when it is required to create 3D representations of an object of archaeological or cultural value, covering said objects in powder and/or immersing said objects in an index matching liquid such as in an oil, may be slow, impractical, and not desirable due to the possible contamination of the objects by the powder and/or liquid used.

Document 'Full 3D reconstruction of transparent objects', Wu Bojian et. Al., ACM Transactions on Graphics, ACM, NY, US, vol. 37, no. 4, discloses a method for reconstructing complete 3D shapes of transparent object. Through positioning an object on a turntable, its silhouettes and light refraction paths under different viewing directions are captured and an algorithm progressively optimizes the model under three constraints: surface and refraction normal consistency, surface projection and silhouette consistency, and surface smoothness. Document US 2012/170049 A1 discloses a device to measure optical properties of a three-dimensional translucent object, and a method to use the device to produce a reproducible and quantitative image of optical properties across the entire volume of the translucent object. Document US 2021/033489 A1 discloses a device and method for measuring the optical effect of an ophthalmic lens, including a computer unit which determines the three-dimensional shape of the lens on the basis of the image data and calculates an optical effect of the lens on the basis of its three-dimensional shape.

Hence, conventional methods and related systems for creating three-dimensional representations of translucent or transparent objects are complex and slow, and may require contaminating the objects. The present invention solves these problems.

### Summary of the Invention

The present invention overcomes the drawback of the prior art because it offers a simple and fast way for creating three-dimensional representations of translucent or transparent objects. Advantageously, the present invention may offer creating the three-dimensional representations without requiring applying to the objects a light scattering or absorbing substance, nor immersing the objects in an index matching liquid. Hence, the present invention may allow creating the 3D representations without contaminating the objects. Moreover, advantageously the present invention may be easily implemented at a relatively low cost.

The invention in its first aspect concerns a method as defined in claim 1 for creating a three-dimensional representation of an object. The method comprising the steps of: providing a translucent or transparent object in an air medium; illuminating the object with light which when entering, passing through and exiting the object travels only via the object and the air medium; imaging the illuminated object from different viewing angles, thereby generating respective images; processing the images by applying a color inversion, thereby generating inverted images; processing the inverted images to generate an optical computed tomography representation of the object.

Since the method of the first aspect of the invention involves providing the object in an air medium, it advantageously does not require immersing the object in an index matching liquid as would happen when applying conventional methods of the prior art. Hence, in the present invention the medium in which the object is located for being imaged is air and not liquid. Therefore, there is avoided contaminating the object with an index matching liquid that would be used in convention methods. In the prior art, index matching liquids are used for reducing the difference of the refractive indexes between the solid material(s) from which the object is made, and the medium surrounding the object that is being imaged. The value of the refractive index of air is about 1, whereas a typical refractive index matching liquid has a refractive index which is larger than 1 and closer to the refractive index of the solid material(s) from which the object may typically be made of. Such a refractive index matching liquid is used in the prior art for reducing the aforementioned refractive index difference, and hence, for reducing or avoiding the refraction of the light that enters, propagates through and exits the object, for thereby reducing the impact and possible distortion that said refraction may have on the images of the illuminated object. In contrast to the teachings of the prior art, the inventors of the present invention found that using said refractive index matching liquids is not a necessary requirement, and indeed, there can be created an optical computed tomography, i.e., an optical projection tomography, 3D representation of a transparent or translucent object, by directly providing the object in the air medium. It is noted that since the method involves providing the transparent or translucent object in the air medium, and since the light when entering, passing (i.e. propagating) through and exiting the object travels only via the object and the air medium, it can be also understood that for taking the images the object need not be covered with a light scattering or light-absorbing opaque foreign powder or other opaque foreign substance i.e. a substance that is not part of the object. Such a foreign solid powder or substance if applied, as happens in many conventional methods of the prior art where the object is being spray-coated with an opaque substance, would be considered as part of the medium in which the object is provided, hence, said medium would not be air as in the present invention, but instead would be a medium comprising the solid substance. Considering the above, in preferred embodiments of the invention, for imaging the illuminated object, the latter is directly exposed to the air medium without involving the use of any refractive index-matching liquid nor the use of any opaque-spray coating.

One of the reasons for which in many conventional methods the object to be imaged in coated with an opaque substance, is to increase the absorption or scattering of the light that is used for illuminating the object when imaging the latter, so that the captured images can convey information regarding the absorption of light by the object. In contrast to the prior art, the inventors of the present invention found that the inverted images which are obtained by the step of applying a color invention of the images of the transparent/translucent object, can be considered as a type of absorption or pseudo-absorption images which can be subsequently used for generating the 3D representation of the object, even when said object is not coated with an opaque foreign substance. Therefore, it can be understood that a technical effect of the step of generating the inverted images by applying the color inversion of the original images, is to create a type of pseudo-absorption images which can be processed for generating the optical computed tomography 3D representation.

The steps of processing the images and processing the inverted images may be applied efficiently and at high speeds using a computer. Therefore, preferably the step of processing the images by applying a color invention, and the step of processing the inverted images to generate an optical computed tomography representation of the object, are done (implemented) by means of one or more computers, and more preferably are executed automatically by the respective computer which for this purpose may be configured (i.e., programmed) accordingly. Nevertheless, there is also contemplated that the execution of said steps may at least partially be non-automatic and involve an input of a person who may be a user of said computer.

As mentioned, the method of the first aspect of the invention comprises the step of imaging the illuminated object from different viewing angles, thereby generating respective images i.e., images from different viewing angles. This step essentially allows for generating a series of images which combinedly convey information on the 3D form (shape) and volume of the object and are used (in their color-inverted form) for generating the optical computed tomography representation of the object. In preferred embodiments of the invention, the step of imaging the illuminated object from different viewing angles comprises the following: using a camera for taking a video or images of the object; using rotation means for either rotating the object with respect to the camera and an illumination source used for illuminating the object, or for rotating the camera with respect to the object and the illumination source, preferably the rotation means being a rotation table. Also, in a very preferred embodiment there is used rotation means for rotating the object around a rotational axis of the object while the camera is fixed at a first position (camera position) and aimed towards the object for taking the images from the different viewing angles. Hence, in a very preferred embodiment of the method of the first aspect of the invention, the method's step of providing the object in air, comprises providing the object on a rotation table. In another preferred embodiment, for taking the images of the object from the different viewing angles, said camera is rotated around the rotational axis of the object while it is maintained aimed at the object which is at a fixed second position (object position).

In some preferred embodiments of the invention, the different viewing angles are within a viewing angle range from 0 to 360 degrees or from 0 to 180 degrees. Fully rotating the object by 360 degrees while taking images at different rotation angles, allows creating the representation of the object even if the object is not symmetrical. However, it may suffice rotating the object by less than 360 degrees in total, especially if the object exhibits some type of symmetry. For example, if the object exhibits a rotational symmetry (i.e., a radial symmetry) or a mirror symmetry or a different type of symmetry it may be sufficient to rotate the object by less than 360 degrees in total, e.g., by 180 degrees or a different number of degrees.

As already mentioned, the method of the first aspect of the invention comprises the step of illuminating the object with light. The light used may be monochromatic or may comprise radiation of two or more wavelengths. Preferably said light is broadband or white light. For optimizing the process, it is preferable that said light is being provided by illumination means which may be light source. In a preferred embodiment said light source is an LED panel or another type of source comprising a surface which turns bright when the source is in operation. Preferably said surface should become (i.e., turn) uniformly bright when the source is turned on, because a uniformly bright surface may advantageously illuminate substantially uniformly the object and act as a uniform bright background against which, at least in some embodiments, the object appears in the images being generated by the step of imaging the object. Having a uniform bright background may advantageously allow for simplifying the subsequent processing of the images for the generation of the optical computed tomography representation. It is noted that in a preferred embodiment in which the object is illuminated using bright surface as mentioned above, the step of imaging the illuminated object is done using a camera which is aimed at the object and at the bright surface, and is located, with respect to the object, oppositely the bright surface. More preferably said camera is located such that the bright surface encompasses (i.e., fully covers) the field of view of the camera. By having the camera facing both the object and the bright surface behind the object, said bright surface acting as a uniform background which covers the entire field of view of the camera, it is further easy and simple to use the images of the object for deriving therefrom information regarding the optical absorption of the light by the object's walls and interior. As mentioned, said information may be derived because the inverted images function as pseudo-absorption images i.e., they allow deriving therefrom information on the optical absorption of the light by the object's various transparent or translucent regions/parts. The overall process may be further simplified if there is used a rotation table for rotating the object for taking the different viewing angle images. Considering the above, in a preferred embodiment of the method, providing the object in air comprises providing the object on a rotation table; illuminating the object in the air is done using a substantially uniformly bright surface, preferably an LED panel; imaging the illuminated object is done using a camera which is aimed at the object and the bright surface, and is located, with respect to the object, oppositely the bright surface preferably such that the bright surface encompasses the field of view of the camera; imaging the illuminated object from different viewing angles comprises using the camera while illuminating the object with the bright surface and while rotating the object with the rotation table.

In a preferred embodiment of the method of the first aspect of the invention, processing the inverted images comprises using a three-dimensional cone beam scanning setup algorithm. Said "cone" beam scanning setup algorithm is known in the technical field of X-ray tomography, and the inventors of the present invention have found that it is an algorithm that works exceptionally well in the present invention for the generation of the optical computed tomography 3D representation. The optional use of said "cone" algorithm advantageously renders the overall process easy and fast to implement and promotes the accuracy of the obtained results. However, in other embodiments there are used other alternative scanning setup algorithms known in the field of X-ray tomography, such as for example the 2D parallel beam setup, the 2D fan beam setup or the 3D parallel beam setup.

In a preferred embodiment of the method of the first aspect of the invention, the step of processing the inverted images comprises generating a three-dimensional density volume which comprises voxels of respective density values. The generation of a three-dimensional density volume advantageously facilitates the 3D mapping and visualization of the object, and also facilitates the possible subsequent optimization of said mapping and visualization. A preferable way for achieving said subsequent optimization of the mapping and visualization of the object, is to remove from the three-dimensional (3D) density volume the voxels for which the respective density values is below a threshold value, thereby generating a thresholded three-dimensional density volume. The removed voxels may correspond to regions filled with air which generally has a lower density compared to the solid regions of the object, so that the density volume formed by the remaining (unremoved) voxels represents more accurately the solid object. More preferably, after removing the low-density voxels as mentioned above, the thresholded three-dimensional density volume may be further processed voxel-by-voxel to extract peak densities on each line and corresponding peak locations. The latter step may advantageously enable extracting single surfaces from the thresholded density volume, because the peaks may represent areas with the most dense material and, hence, may represent the sidewalls of the object. Therefore, in a preferred embodiment which comprises generating a three-dimensional density volume, in addition, the step of processing the inverted images further comprises: removing from the three-dimensional density volume the voxels for which the respective density values is below a threshold value, thereby generating a thresholded three-dimensional density volume that comprises voxels; post-processing the thresholded three-dimensional density volume voxel-by-voxel to extract peak densities and corresponding peak locations.

For some applications, the 3D representation of the object may need to be scaled and be made to comprise information regarding the true dimensions of the translucent or transparent object, so that by measuring distances between features of the object's 3D representation, there can be correctly estimated the corresponding distances between the corresponding features of the real object. For this purpose, in a preferred embodiment of the first aspect of the invention, the method further comprises measuring a known reference object for calculating a calibrated scaling factor which is used for generating the three-dimensional optical computed tomography representation of the object. Hence, in the optional case that the method comprises extracting peak densities and corresponding peak locations from a thresholded three-dimensional density volume as described further above, then preferably the method further comprises scaling the peak locations using a calibrated scaling factor.

The optional feature of the object exhibiting a symmetry, may advantageously be beneficial for optimizing the accuracy of the generated optical computed tomography representation. In the optional case that the object exhibits a cylindrical symmetry, then two regions of the objects which are located on opposite sides and are symmetric with respect to each other, may cause respective opposite refraction effects which can cancel each other. Hence, the refractions effects at the opposite sides of the object, may cause respective opposite beam shifts which cancel each other. This way, a ray of light which before it enters the object from a first region of the object travels along a line, will also travel along the same line when it exits the object from the second region of the object and, hence, the two opposite refractions at the two opposite sides of the object may "correct" each other for advantageously avoiding the image distortion that could be caused by the individual refraction effect at either of the sides. Likewise, the refraction may advantageously also be reduced or minimized in the optional case that the object is hollow, especially when also the object comprises thin walls e.g., walls the thickness of which is less than 3mm. Then, advantageously the possible shift of a light beams which propagates through the object and the latter's walls may be very small or insignificant so that it does not affect in a substantial way the accuracy of the generated 3D representation. Therefore, in preferred embodiments of the invention the object is hollow and/or has cylindrical symmetry. Also, in a preferred embodiment, the object comprises walls of thickness of less than 3 mm.

In preferred embodiments of the invention the object comprises a transparent or translucent plastic or a glass material. More preferably the object is made of plastic or glass. The present invention is particularly suitable for creating high quality and substantially accurate 3D representations of objects made of glass and/polymer. Moreover, there exist many objects of an archaeological or other cultural importance, for which it is desirable to create accurate 3D representations. Examples of such types of objects are ancient caps, vessels, bowls, or perfume bottles made of glass. The present invention can be applied for the study of these types of objects. Similarly, the present invention can be used for creating 3D representations and for doing related measurements of objects which are industrially made and used for the packaging of food, drinks or other liquid or solid contents. The present invention, by enabling the fast and easy creation of high-quality 3D representations of these types of objects, can be used for quality control at the industrial production of the objects.

The present invention in a second aspect concerns an apparatus as defined in claim 12 for creating a three-dimensional representation of a translucent or transparent object provided in an air medium, the apparatus comprising: an imaging system configured to illuminate the translucent or transparent object, and to image the illuminated object from different viewing angles, thereby generating respective images; a computer configured to process the images by applying a color inversion, thereby generating inverted images, and also configured to process the inverted images to generate a three-dimensional optical computed tomography representation of the object. It is noted that the apparatus of the second aspect of the invention may alternatively be called "system" or "device" or another similar name.

In a preferred embodiment of the apparatus of the second aspect of the invention, the imaging system comprises a rotation table for receiving thereon the object, and for rotating the object. Said rotation table may rotated the object with respect to an image capturing device, e.g., a camera, of the imaging system, so that the latter can capture/take the images from the different viewing angles.

In a preferred embodiment of the apparatus of the second aspect of the invention, the imaging system comprises an illumination source for illuminating the object. More preferably, said illumination source is an LED panel.

In a preferred embodiment of the apparatus of the second aspect of the invention, the imaging system comprises a camera. Said camera may be a digital camera connected to the computer and may be configured to take images and/or a video of the object. Said video may be used for extracting therefrom image frames, i.e., images, of the object.

In a preferred embodiment of the second aspect of the invention, the apparatus further comprises a chamber to receive therein the object for imaging the object. Said chamber may advantageously serve for controlling the illumination of the object, and for avoiding the object being illuminated by ambient natural or artificial light sources. Hence, said chamber may advantageously allow and facilitate illuminating the object in a controlled way. For example, if the apparatus is located in a room wherein the intensity of the ambient light may fluctuate e.g., due to fluctuation of room lights or the movement of people or things within the room, then these fluctuations may be detrimental to the quality and accuracy of the 3D representation of an object that is measured with the apparatus. Hence, by placing said object within a chamber wherein preferably there is also the imaging system, e.g., a light source and a camera of the system, the chamber may protect the object and the imaging of the object from the room's ambient light and from any variation in said ambient light. This may be advantageous if the present invention is being applied in an industrial location e.g., at a production line in a factory, wherein may objects or people may be moving, and wherein ambient light may be provided by a plethora of roof lights or other light sources.

As mentioned, the computer of the apparatus of the second aspect of the invention may be programmed to process the images and the invented images, and to generate the three-dimensional optical computer tomography representation. Likewise, the computer may be optionally configured or programmed to execute any of the optional method steps or sub-steps mentioned further above related to the image processing and the generation and/or the optional scaling of the 3D representation. Hence, a further aspect of the invention concerns a computer program comprising instructions which, when the program is executed by a computer, cause the computer to carry out any of the steps or sub-steps related to any of the steps related to the processing of the images or of the inverted images, and/or the generation of the three-dimensional optical computed tomography representation of the object.

Another aspect of the present invention concerns using the apparatus of the second aspect of the invention for representing in three dimensions plastic bottles, particularly in a production line of said bottles. Experiments have shown that the present invention works exceptionally well for creating in a fast and easy to implement way 3D representations of plastic bottles for drinks, refreshments or other liquids.

Another aspect of the present invention concerns using the apparatus of the second aspect of the invention for representing in three dimensions cultural heritage artifacts, particularly archeological artefacts. Experiments have shown that the present invention works exceptionally well for creating in a fast and easy to implement way 3D representations of glass caps, bottles or other types of containers or vessels of archeological or cultural heritage value.

Any feature of the embodiments of the first aspect of the invention described herein can be also found in corresponding embodiments of the second or another aspect of the invention, and *vice versa.* Additional advantages and features of the invention will become apparent from the detailed description that follows and will be particularly pointed out in the appended claims.

### Drawings

To complete the description and in order to provide for a better understanding of the invention, a set of drawings is provided. Said drawings form an integral part of the description and illustrate experimental results and embodiments of the invention, which should not be interpreted as restricting the scope of the invention, but just as examples of how the invention can be carried out. The drawings comprise the following figures:
FIG. 1 illustrates a flow diagram a preferred embodiment of a method according to the invention.
Fig. 2 illustrates a flow diagram of a preferred embodiment of a method according to the invention.
Fig. 3 illustrates a block diagram of a preferred embodiment of an apparatus according to the invention.
Fig. 4 illustrates a preferred embodiment of an imaging system of an apparatus according to the invention.
Fig. 5A - Fig.5D illustrates different scanning setups used in respective embodiments of the invention.
Fig. 6 schematically illustrates the step of post-processing the thresholded three-dimensional density volume voxel-by-voxel to extract peak densities and corresponding peak locations, wherein said step is included in a preferred embodiment of a method of the first aspect of the invention.
Fig. 7 illustrates photographs of objects and corresponding 3D representations generated with a known conventional technique (structure light scanning), as well as corresponding optical projection tomography 3D representation generated with a preferred embodiment of the invention.
Fig. 8 illustrates optical projection tomography (OPT) representations generated with a preferred embodiment of the invention.
Fig. 9 illustrates an image of an object that includes a part of a bottle located within another part of the bottle, and also illustrates the same object's optical projection tomography (OPT) representation generated with a preferred embodiment of the invention.
Fig. 10 schematically illustrates the effect of parallel beam shift predicted by Snell's Law of refraction, when a beam is incident on a slab of material of refractive index n2 in a medium of refractive index n1.
Fig. 11 illustrates beam shift distances d as a function of angle of incidence θ1, as calculated by Snell's law for PET plastic of refractive index 1.58 and for different thicknesses h between 0.2 and 2mm.
Fig. 12 illustrates beam shift distances d as a function of angle of incidence θ1, as calculated by Snell's law for a glass of refractive index 1.51 and for different thicknesses h between 0.2 and 2mm.
Fig. 13 schematically illustrated calculated refraction of visible light rays from i) a solid disk object (top) and ii) a hollow disk object with a thin size wall (bottom), both with a refractive index of 1.58.

### Detailed Description of Embodiments

The following description is not to be taken in a limiting sense but is given solely for the purpose of describing the broad principles of the invention. Next embodiments of the invention will be described by way of example, with reference to the above-mentioned drawings, showing apparatuses, methods and results according to the invention.

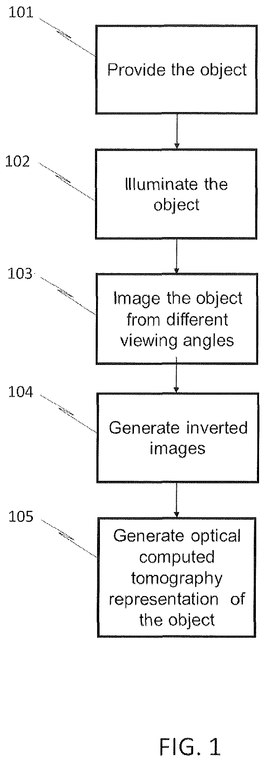

A preferred embodiment of a method for creating a three-dimensional representation of an object, is illustrated in Fig. 1 and comprises the following steps:
In step 101, providing a translucent or transparent object in an air medium.
In step 102, illuminating the object with light which when entering, passing through and exiting the object travels only via the object and the air medium.
In step 103, imaging the illuminated object from different viewing angles, thereby generating respective images.
In step 104, processing the images by applying a color inversion, thereby generating inverted images.
In step 105, processing the inverted images to generate an optical computed tomography representation of the object.

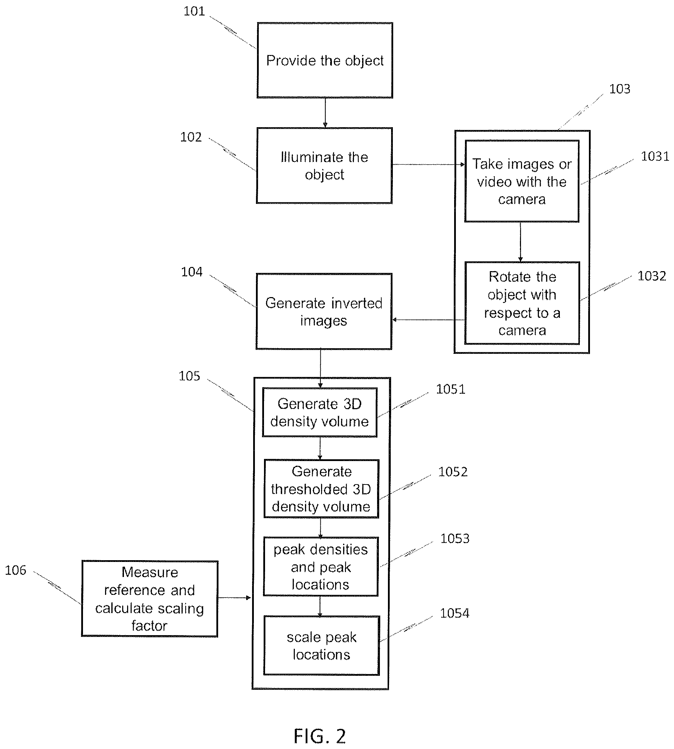

Another preferred embodiment of a method according to the first aspect of the invention is illustrated in Fig. 2. The embodiment of Fig. 2 is similar to the embodiment of Fig. 1 but comprises the following additional features. In the method of Fig. 2, step 103 comprises the following sub-steps: in sub-step 1031, using a camera for taking a video or images of the object; in sub-step 1032, using rotation means for rotating the object with respect to the camera and an illumination source used for illuminating the object. Hence, the images or video is/are being taken in sub-step 1031 during the duration of the rotation of the object in step 1032. Therefore, it may be understood that at least parts of steps 1031 and 1032 coincide in time. As an alternative to step 1032, it is possible to rotating the camera with respect to the object and the illumination source. It is noted that said rotation means preferably is a rotation table on which the object is placed.

Moreover, in the embodiment of Fig. 2, step 105 comprises the following sub-steps: in sub-step 1051, generating a three-dimensional density volume which comprises voxels of respective density values; in sub-step 1052, removing from the three-dimensional density volume the voxels for which the respective density values is below a threshold value, thereby generating a thresholded three-dimensional density volume that comprises voxels; in sub-step 1053, post-processing the thresholded three-dimensional density volume voxel-by-voxel to extract peak densities and corresponding peak locations; in sub-step 1054, scaling the peak locations using a calibrated scaling factor. The embodiment of Fig. 2 also comprises step 106 in which a known reference object, i.e., an object of known dimensions and shape, is measured for calculating the calibrated scaling factor that is used in sub-step 1054 as mentioned above for generating the three-dimensional optical computed tomography representation of the translucent or transparent object.

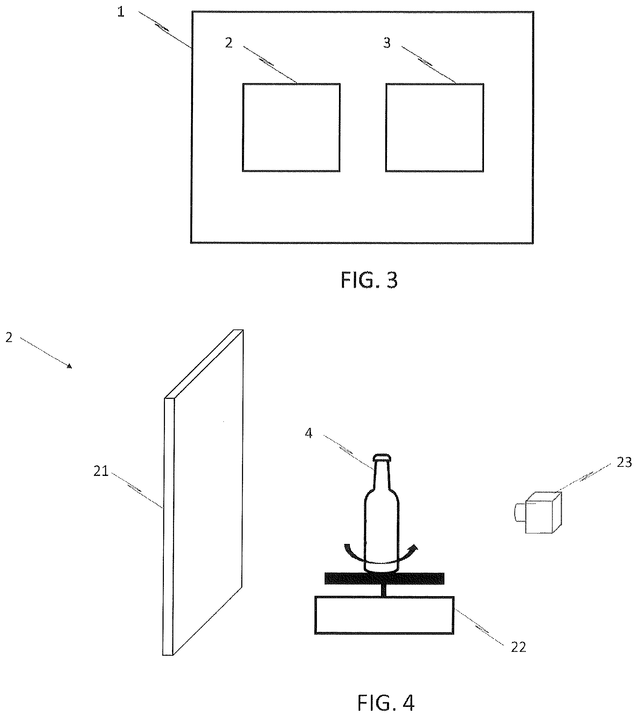

Fig. 3 illustrates a block diagram of a preferred embodiment of an apparatus according to the second aspect of the invention. The embodiment of Fig. 3 is suitable for creating a three-dimensional representation of a translucent or transparent object provided in an air medium. The apparatus of Fig. 3 comprises: an imaging system 2 configured to illuminate the translucent or transparent object, and to image the illuminated object from different viewing angles, thereby generating respective images; a computer 3 configured to process the images by applying a color inversion, thereby generating inverted images. The computer 3 is also configured to process the inverted images to generate a three-dimensional optical computed tomography representation of the object. It is noted that the term "optical projection tomography" may also be used for describing, as well for replacing, the term "three-dimensional optical computed tomography" which is used throughout the present disclosure.

In a preferred embodiment, the imaging system 2 has the configuration that is schematically illustrated in Fig. 4. The imaging system 2 of the embodiment of Fig. 4 comprises a rotation table 22 on which the object 4, e.g., a bottle, is placed so that the rotation table 22 can rotate the object 4. Moreover, the imaging system 2 of Fig. 4 comprises an illumination source 21, specifically an LED panel, and a camera 23 aimed towards the object and the LED panel which covers the entire field of view of the camera. As shown in Fig. 4, said camera 23 is located, with respect to the object, oppositely the bright surface preferably such that the bright surface encompasses the field of view of the camera 23. With the imaging system of Fig. 4 it is possible to: illuminate the object in the air using the LED panel a surface of which becomes uniformly bright when the panel is turned on; image the illuminated object using the camera. The panel 21 provides light that passes through the object 4, and is collected/detected by the camera 23 which is located on the opposite side of the object with respect to the LED panel. By rotating the object with the rotation table, it is possible to image the object 4 from different viewing angles i.e., different orientations or rotational positions of the object 4 with respect to the camera 23.

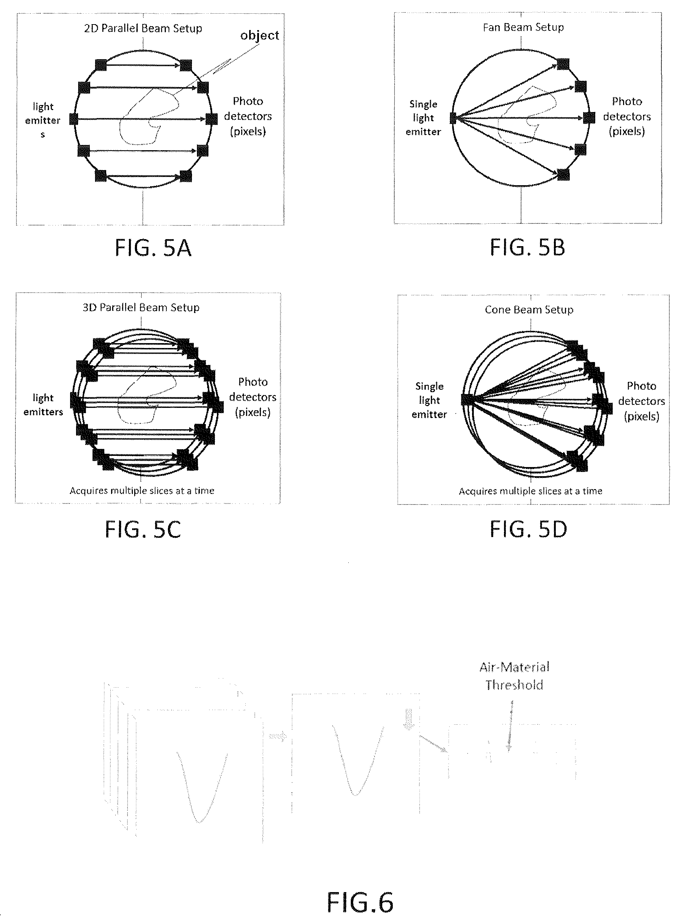

The exceptional performance and suitability of the present invention for creating optical computed tomography 3D representations, i.e., optical projection tomography (OPT) 3D representations, of translucent or transparent objects was tested via experiments which are described below with reference to Fig. 5-13.

The present invention was applied for measuring several different translucent or transparent thin-walled and cylindrically symmetric objects in air without the use of index matching liquid. For performing the tomography calculations from the collected images, there was used the Astra Software Toolbox which is a known open-source X-ray computed tomography package. Using said toolbox it was possible to select between four scanning configurations which are schematically shown in Fig. 5A-5D and are: for 2D scanning, a 'parallel beam' (Fig. 5A) setup and a 'fan beam' (Fig. 5B) setup; and for 3D scanning, a 'parallel 3d' (Fig. 5C) setup, and a 'cone' (Fig. 5D) setup.

For the experiments, in the software the "cone" configuration (Fig. 5D) was used, by replacing the X-ray source with an optical camera, and the X-ray detectors with a field light source (LCD Panel), similarly to what is shown in Fig. 4. It was assumed that the camera used can be modelled by the 'pinhole camera model', and therefore there was essentially used the 3D 'cone' beam geometry in reverse. For this reason, the calibration parameters used in the specific setup are not explicitly transferable to the optical camera setup in the sense that the result may not be of the correct scale.

In the 'cone' beam setup used, the following parameters were set in the Astra Toolbox: CCD x and y pixel distance (set to 1), number of pixel rows in the detector (512), number of pixel columns in the detector (512), explicit projection angles (64 points of view), distance between source and center of rotation (70 cm), distance between center of rotation and detector array (20 cm). By using these values, the correct object shape was acquired, but it was scale-less. It was contemplated that the acquired object shape could be scaled appropriately by either measuring its exact distance from the camera, or by scaling the results with the measurement of a known object. The latter was performed in this particular experiment. Hence, a polished glass ball 80 mm in diameter (also known as a 'lens ball' in specialist photography) was used for calibration. Since the reference ball used is not hollow and has a convex shape, its outer surface was reconstructed by manually extracting its silhouette from each of the 64 axial rotations by the 'visual hull' 3D reconstruction method. The sphere's reconstruction was then loaded in a known point cloud processing software (CloudCompare), and its diameter was measured. The measured diameter was then divided by the true 80 mm sphere diameter to acquire the system's calibrated scaling factor.

In the Astra Toolbox software, there was used the filtered back propagation algorithm which is typically used in Xray-CT to reconstruct the measured volume density from the photographs taken at each rotation angle. The density of each voxel g(x,y,z) was calculated per slice f(x,y) at a particular z height by the integral in Eq. 1: ${f}_{fbp} = \int {q}_{θ} \left(xcosθ+ysinθ\right) dθ$ (1)

Where θ is the rotation stage's angle, x and y are the particular slice's voxel locations and q_{θ}(t) is the filtered Fourier transform of the detected image described in Eq. 2: ${q}_{θ} \left(t\right) = \int {P}_{θ} \left(ω\right) \left|ω\right| {e}^{i 2 πωt} dω$ (2)

Where ω the frequency in the Fourier domain, t the spatial dimension of the 1D absorption measurement of each slice (the row of pixels of the photograph acquired at each rotation).

In the conducted experiments, for measuring the shape of thin-walled transparent items with a preferred embodiment of the present invention without the use of refractive index-matching fluid, the following experimental sequence was followed:
1. A rotation stage, a camera and a field light source were setup as in the apparatus illustrated in Figure 4.
2. Light from a field source (LCD Panel) was projected through the object and registered at the camera which was a black and white camera.
3. The object was placed in the middle of the rotation stage and was rotated to acquire 64 rotational views around the object.
4. The images acquired by the black and white camera were inverted so that areas of high absorption appear bright and areas of low absorption appear darker.
5. The images were processed using the Astra Toolbox' X-ray CT reconstruction software into a density volume.
6. Thresholding the voxels of the 3D density volume to remove the low density of air, what was left was the higher density voxels of the object.
7. To extract a single surface from the thresholded density volume, then the object density volume was post-processed slice-by-slice and line-by-line, to extract only the peak densities on each row of the image plane, as shown in Fig. 6. The identified peaks represent the areas with the most dense material and hence those of the sidewall.
8. The peak locations were then scaled using the calibrated scaling factor which was calculated using the polished glass ball as mentioned further above.

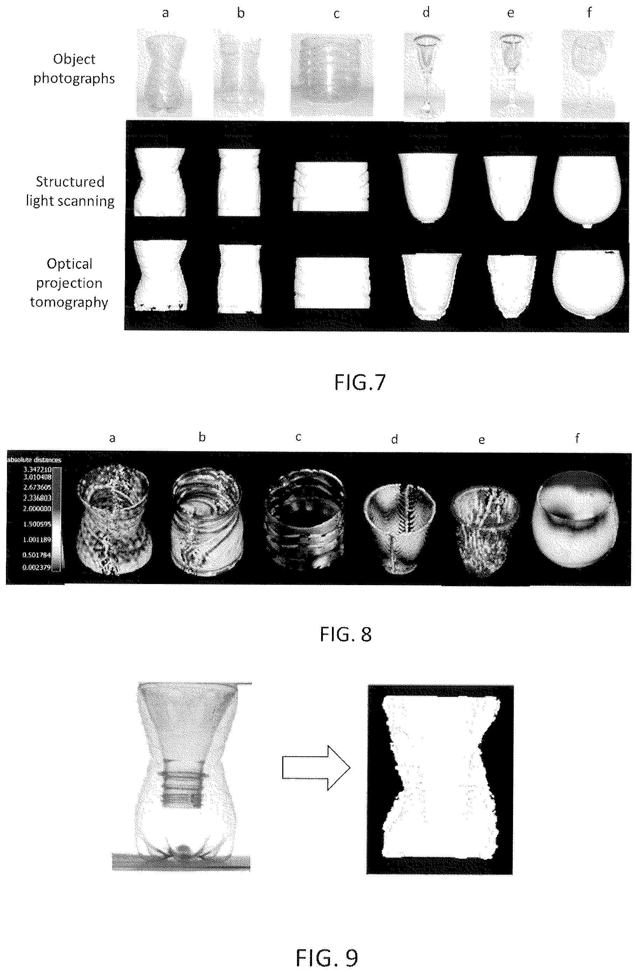

The types of objects measured in the particular experiments are hollow, thin-walled, cylindrically-symmetric objects, which do not induce considerable refraction as light traverses through them. Plastic objects of this type are ubiquitous, and are commonly found and used in the beverage industry (e.g., soda, water bottles). Three of the objects measured were a soda bottle and two water bottles which are indicated as a-c in Fig. 7. Another category of objects selected for testing were transparent cultural heritage drinking cups. The present invention is also suitable for measuring these types of objects for which the use spray coatings should ideally be avoided due to the fragility of the particular objects. However, measuring these objects may be a particularly challenging task, because in these objects the thickness of the material is not constant around the whole object. These objects contain areas where the light passing through the object encounters large amounts of material and therefore gets refracted significantly (neck, base, bottom of cup area). A lot of cultural heritage items also contain embossed features around the object, and said embossed features further add to the material thickness in specific areas. A number of thin-walled hollow contemporary glass objects similar to those found in cultural heritage collections such as wine and liqueur glasses, were included in the experiments performed, and are indicated as d-f in Fig. 9.

Before reconstructing the plastic bottles selected for the experiments described herein, the bottles were cut down for two reasons. The first is that their sidewall thickness were accurately measured using electronic callipers, and the respective measurements are shown in Table 1. The second reason is so that the objects could fit in the field of view of the camera used in the setup (the apparatus), which could only measure objects of about 150 mm in height. To measure the hollow areas, i.e., the cup area, of the selected glass objects (wine and liqueur glasses), the glass objects were placed inverted onto the rotation table with the hollow side down and the stem and base pointing up. Only the hollow parts of the glass items were measured, and the stem and base which contain thick material areas were ignored in this particular experimental study.

**Table 1: Thickness measurements of the object's sidewalls.**

| Object | | Average of eight sidewall thickness measurements around the object's rim |
|---|---|---|
| | a. Soda bottle | 0.23 mm |
| | b. Water bottle | 0.14 mm |
| | c. Large water bottle | 0.14 mm |
| | d. Liquor glass 1 | 2.1 mm |
| | e. Liquor glass 2 | 2.3 mm |
| | f. Wine glass | 0.7 mm |

In order to obtain reference 3D reconstruction results for the outside shapes of the measured items, we scanned the objects with a conventional white light structured light optical scanner that is typically used for industrial purposes. The reference scanner was calibrated to an accuracy of ± 22 µm using calibration plates which were provided with the scanner. For using this scanner, the transparent objects needed to be coated with an opaque spray coating. Then, using the aforementioned point cloud software, both the reference point clouds reconstructions and the point cloud reconstructions created by using the method of the present invention, which can be considered as being a new type of optical projection tomography (OPT) technique, were first aligned by hand and then aligned more accurately via Iterative Closest Point (ICP) to an error tolerance of 10⁻⁴. Finally, to extract the dimensional error, the residual point cloud distances were calculated. The point cloud errors were depicted as color textures on the OPT point clouds shown in Fig. 8, and the numerical average of the point cloud distances for each object is reported in Table 2. Also Fig. 7 shows the obtained 3D representations of the measured objects. Hence, in view of the results shown in Fig. 7, it can be concluded that the present invention can be used for acquiring 3D representations of the measured objects.

**Table 2: Results of the comparison of the point clouds acquired by applying the present invention and a reference measurement from an industrial-grade 3D scanner.**

| Object | | Average cloud point distance to reference 3D point cloud. |
|---|---|---|
| g. | Soda bottle | 0.23 mm |
| h. | Water bottle | 0.14 mm |
| i. | Large water bottle | 0.14 mm |
| j. | Liquor glass 1 | 2.1 mm |
| k. | Liquor glass 2 | 2.3 mm |
| l. | Wine glass | 0.8 mm |

There are multiple known methods of comparing point clouds, using point-to-point, point-to-mesh, mesh-to-mesh strategies. For the specific experiments shown herein, the inventors opted for using the closest point-to-point distance, rather than comparing point-to-mesh or mesh-to-mesh, because in this particular case, the reference point clouds created by the structured light scanner were extremely dense, and therefore it was not required to create a mesh surface to accurately compare the point clouds.

For glass objects, the average distance errors (± 0.92 mm) as expected were higher on average than that measured for the plastic objects (± 0.34 mm). However, in the glass objects measured, compared to the plastic objects, there was more intense refraction effects which resulted to the appearance of somehow distorted embossed shapes (Fig 7- e), artificial 'ghost material' partially filling up the hollow areas, and the reduction the object's size.

The maximum precision expected from the specific OPT setup used in the present experiments, in general was calculated by dividing the available camera pixels to the field of view and was found to be 0.512 mm per pixel. Therefore, the minimum dimensional error expected on the lateral and vertical distances is half this value, ± 0.206 mm. This sanity check is in line with the collected measurements (Table 2). The measurement with the lowest error achieved was an average point cloud distance of ± 0.290 mm between the OPT and the reference reconstructions for object clarge water bottle" (Table 2).

With the conducted experiments the inventors further sought to qualitatively compare the technique of the present invention, with the "visual hall" technique which was used during calibration. The visual hull technique may operate in the visible spectrum without the use of spray coatings and can extract only the external convex shape via use of silhouettes, which is why it was used to measure the calibration sphere as described further above. For hollow non-convex objects however, it is known that the "visual hall" technique cannot be used as it produces a solid convex 3D shell around the object. Similarly, it is known that, when using the visual hull technique, convex cavities (small craters) around the external surface of the object may appear as 'filled up' due to the nature of the visual hull technique. However, the technique (method) according to the present invention, which may be considered as a kind of optical projection tomography technique that has some similarities to X-ray CT, does not have these drawbacks as it can reconstruct hollow objects and can also deal with convex surface structures.

Moreover, the method according to the present invention can also measure internal surfaces. To demonstrate the present method's ability for measuring features found in the interior of the objects, the inventors placed two cut-offs of plastic bottles one inside the other, and the reconstructed result, i.e., the 3D representation generated with the method of present invention, is shown in Fig. 9.

The use of present invention over traditional X-ray CT has many benefits as X-ray CT reconstructions are cumbersome, slow, expensive and present health risks to operators. One of the main downsides of conventional OPT is the necessary use of index matching liquid. The present invention however provides a new type of OPT without the need to use index matching liquid. This new type of OTP can be used for successfully reconstructing (i.e., creating the 3D representations of) large objects, especially hollow and thin-walled objects. The inventors coin this new type of OPT, "practical OPT" or "P-OPT".

As shown from the experiments described further above, the use of P-OPT for two specific use-cases was investigated, the reconstruction of plastic bottles in the context of a manufacturing quality control scenario, and the reconstruction of glass objects in the context of a cultural heritage digital preservation scenario. Representative plastic and glass objects for these cases were collected and reconstructed in 3D using the P-OPT.

It was shown that for the plastic bottles measured, an average accuracy of ± 0.34 mm can be achieved with the setup used. The fact that in the conducted experiments the best point cloud accuracy achieved ± 0.290 mm was close to the theoretical precision of the setup ± 0.206 mm indicates that with an even more precise setup, a higher accuracy could potentially be achieved.

For glass objects in the context of cultural heritage on the other hand, which typically have thicker sidewalls, and also typically have some areas with thick optical paths, considerable refraction is produced. Hence, the average shape error of the glass objects measured was higher than that of plastic objects, at ± 0.92 mm.

The experiments showed that P-OPT can be used for measuring hollow thin-walled plastic objects as a replacement for conventional optical metrology tools (structured light and laser scanning, photogrammetry), since it does not require the use of spray coatings and it has several advantages, namely: cheap and easy-to-use setup, safe and fast data acquisition, a high degree of reproduction fidelity and accuracy. It is also able to reconstruct internal structures, something conventional optical tools cannot do.

Hence, the technique (i.e., the method) of the present invention, can be used for dimensional quality assurance of plastic bottles in manufacturing. Also, the conducted experiments showed that the present invention can also be potentially used for the reconstruction of glass cultural heritage objects.

It is noted that as described further above, the present invention is particularly easy to implement and works exceptionally well for the measurement of thin-walled hollow objects because in the latter, there is not significant refraction of the light that is used for illumination and which propagates through the objects. This can be further understood considering the following related to Snell's law of refraction.

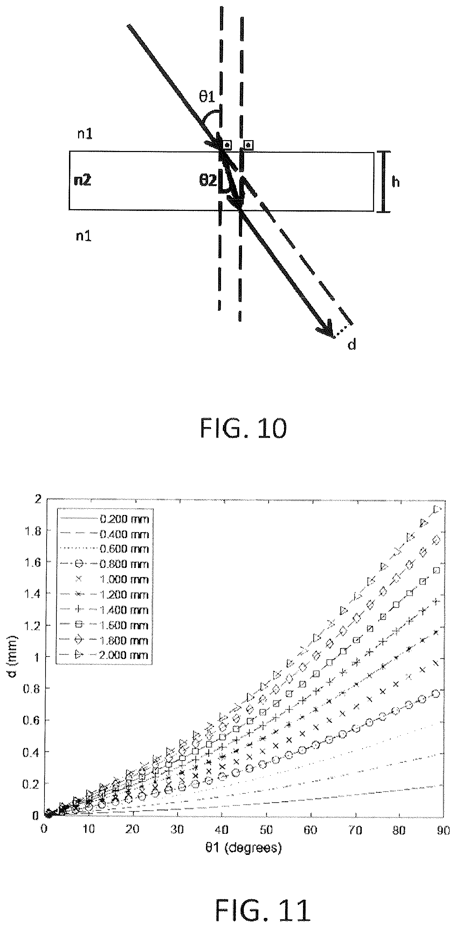

It is assumed that the refraction occurring at any part of a thin-walled (i.e., with walls of thickness of less than 3 mm) hollow transparent object can be approximated to that of a flat thin slab of transparent material. This is a valid approximation, because the sidewalls are relatively thin (thickness of less than 3 mm), and the surface texture contours are typically much larger (≈1mm-10cm) than the scale of the wavelength of the light that is typically used (400-600nm). Therefore, every light ray striking the object will essentially experience the surface as a thin flat slab of material. To measure the parallel beam-shift effect of a light ray through a thin slab, said shift shown in Fig.10, there is used the Snell's law of refraction (Eq.3) both on the incoming and also on the outgoing surface of each sidewall. ${n}_{1} sin \left({θ}_{1}\right) = {n}_{2} sin \left({θ}_{2}\right)$ (3)

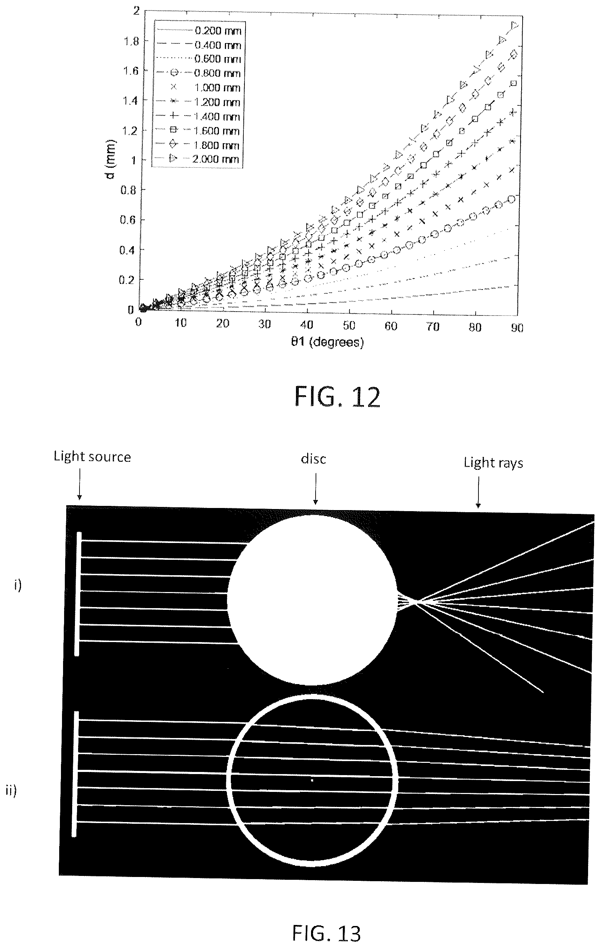

Using the flat slab approximation and Snell's law it is possible to calculate the amount of parallel beam-shift for various angles of incidence and slab thickness. The calculations were performed for the glass and plastic materials of the objects we have selected to measure, with a refractive index (RI) of 1.51 for a type of glass (Fig. 11) and 1.58 for PET (Polyethylene terephthalate) plastic (Fig. 12). As can be seen in Fig.11 and Fig.12, the beam shift increases with the angle of incidence and reaches a maximum which is almost equal to the slab's thickness at an angle of incidence of 89 degrees from surface normal.

Therefore, the systematic analysis which was carried out shows that, for the glass and plastic materials which were selected, the beam shift will be smaller than that of the sidewall thickness at any angle of incidence and therefore at any point on the object. For the hollow objects selected, the sidewalls (0.15 - 2mm) are small compared to their diameter (52 - 80mm), so refraction is not expected to affect considerably the reconstructed shape.

The second effect that makes hollow cylindrical objects especially measurable using the P-OPT according the present invention, is that parallel light rays experience two opposing beam sifts as they propagate through these objects, a first parallel beam shift towards the centre of the object as the ray enters the hollow transparent object, and a beam shift away from the centre of the object as the ray exits the object. This is effect is simulated for multiple parallel beams entering a hollow thin-walled circular disk made of PET material with a RI of 1.58 as shown in Fig. 13- ii.

When a camera with a lens is used and is placed sufficiently far away from the object, the rays which mostly initiated in parallel reach the lens. This can be derived from the ray tracing simulations shown in Figure 13 from where it can be seen that parallel beams become slightly convergent after passing through the shown hollow object (ii in Fig. 13). This is advantageous as these rays can be collected by single camera placed 'far away' from the object, without the need to 'stitch an image' such as in other large scale conventional OPT approaches. In the experiments conducted and described further above, the camera was placed 70 cm from the object which, compared to the measured object diameters of 5-8 cm is at least a ≈9:1 distance-to-size ratio. The field light source selected was a white light LED panel and it was placed as far back as possible whilst concurrently being able to illuminate the whole object (20 cm away in the particular experiments conducted) So, in the experiments done, the total distance between the light source and the camera was 90 cm. In the non-hollow cylindrically-symmetric PET disc of Fig. 13 - i, the light beams pass through a lot more optical material, which causes larger amounts of refraction. The overall beam paths are therefore hanged by a far greater amount, resulting in an intense lensing effect which makes more challenging the object's reconstruction using OPT.

In the context of the present disclosure, the term "about" should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc.

Modifications and additions can be made to the embodiments discussed without departing from the scope of the invention, which is defined by the appended set of claims. For example, while the embodiments described above refer to particular features, the scope of this invention also includes embodiments having different combination of features and embodiments that do not include all of the above-described features.

## Claims

1. Method for creating a three-dimensional representation of an object, comprising:
- providing (101) a translucent or transparent object in an air medium;
- illuminating (102) the object with light which when entering, passing through and exiting the object travels only via the object and the air medium;
- imaging (103) the illuminated object from different viewing angles, thereby generating respective images;
- processing (104) the images by applying a color inversion, thereby generating inverted images;
- processing (105) the inverted images to generate (1051) a three-dimensional density volume, which comprises voxels of respective density values;
- removing from the three-dimensional density volume the voxels for which the respective density values are below a threshold value to remove the low density of air, thereby generating (1052) a thresholded three-dimensional density volume that comprises voxels;
- post-processing (1053) the thresholded three-dimensional density volume voxel-by-voxels to extract peak densities and corresponding peak locations, which represent the areas of the sidewall of the object to generate (105) an optical computed tomography representation of the object.

2. A method according to claim 1, wherein when imaging the illuminated object, the object is directly exposed to the air medium without involving the use of any refractive index-matching liquid nor the use of any opaque-spray coating.

3. A method according to any of the preceding claims, wherein the object comprises a transparent or translucent plastic or a glass material, preferably the object being made of plastic or glass.

4. A method according to any of the preceding claims, wherein the object is hollow and/or has cylindrical symmetry.

5. A method according to any of the preceding claims, wherein the object comprises walls of thickness of less than 3 mm.

6. A method according to any of the preceding claims, wherein imaging the illuminated object from different viewing angles comprises:
using a camera for taking a video or images of the object;
using rotation means for either rotating the object with respect to the camera and an illumination source used for illuminating the object, or for rotating the camera with respect to the object and the illumination source, preferably the rotation means being a rotation table.

7. A method according to any of the preceding claims, further comprising scaling the peak locations using a calibrated scaling factor (1054).

8. A method according to any of the previous claims, further comprising measuring a known reference object for calculating a calibrated scaling factor used for generating the three-dimensional optical computed tomography representation of the translucent or transparent object.

9. A method according to any of the previous claims, wherein processing the inverted images comprises using a three-dimensional cone beam scanning setup algorithm.

10. A method according to any of the previous claims, wherein providing the object in air comprises providing the object on a rotation table;
illuminating the object in the air is done using a substantially uniformly bright surface, preferably an LED panel;
imaging the illuminated object is done using a camera which is aimed at the object and the bright surface, and is located, with respect to the object, oppositely the bright surface preferably such that the bright surface encompasses the field of view of the camera;
imaging the illuminated object from different viewing angles comprises using the camera while illuminating the object with the bright surface and while rotating the object with the rotation table.

11. A method according to any of the previous claims, wherein the different viewing angles are within a viewing angle range from 0 to 360 degrees or from 0 to 180 degrees.

12. An apparatus for creating a three-dimensional representation of a translucent or transparent object provided in an air medium, the apparatus comprising:
- an imaging system (2) configured to illuminate the translucent or transparent object, and image the illuminated object from different viewing angles, thereby generating respective images;
- a computer (3) configured to process the images by:
- applying a color inversion, thereby generating inverted images,
- processing the inverted images to generate a three-dimensional density volyme, which comprises voxels of respective density values;
- removing from the three-dimensional density volume the voxels for which the respective density values are below a threshold value to remove the low density of air, thereby generating a thresholded three-dimensional density volume that comprises voxels;
- post-processing the thresholded three-dimensional density volume voxel-by-voxels to extract peak densities and corresponding peak locations, which represent the areas of the sidewall of the object to generate a three-dimensional optical computed tomography representation of the object.

13. An apparatus according to claim 12, wherein the imaging system comprises a rotation table for receiving thereon the object, and for rotating the object.

14. An apparatus according to claim 12 or 13, wherein the imaging system comprises an illumination source, preferably an LED panel, for illuminating the object.

15. An apparatus according to any of claim 12-14, wherein the imaging system comprises a camera.

16. An apparatus according to any of claim 12-15, further comprising a chamber to receive therein the object for imaging the object.

17. Use of an apparatus according to any of the claims 12-16, for representing in three dimensions plastic bottles, particularly in a production line of said bottles, or for representing in three dimensions cultural heritage artifacts, particularly archeological artefacts.

## Patentansprüche

1. Verfahren zum Erstellen einer dreidimensionalen Darstellung eines Objekts, umfassend:
- Bereitstellen (101) eines durchscheinenden oder transparenten Objekts in einem Luftmedium;
- Beleuchten (102) des Objekts mit Licht, das beim Eintreten in das Objekt, Durchdringen des Objektes und Austreten aus dem Objekt nur über das Objekt und das Luftmedium verläuft;
- Abbilden (103) des beleuchteten Objekts aus verschiedenen Blickwinkeln, wodurch jeweilige Bilder erzeugt werden;
- Verarbeiten (104) der Bilder durch Anwenden einer Farbumkehrung, wodurch umgekehrte Bilder erzeugt werden;
- Verarbeiten (105) der umgekehrten Bilder, um ein dreidimensionales Dichtevolumen zu erzeugen (1051), das Voxel mit jeweiligen Dichtewerten umfasst;
- Entfernen der Voxel aus dem dreidimensionalen Dichtevolumen, deren jeweilige Dichtewerte unter einem Schwellenwert liegen, um die geringe Dichte der Luft zu entfernen, wodurch ein dreidimensionales Dichtevolumen mit Schwellenwert erzeugt wird (1052), das Voxel umfasst;
- Nachverarbeiten (1053) des dreidimensionalen Dichtevolumens mit Schwellenwert Voxel für Voxel, um Spitzendichten und entsprechende Spitzenorte zu extrahieren, die die Bereiche der Seitenwand des Objekts darstellen, um eine optische Computertomographie-Darstellung des Objekts zu erzeugen (105).

2. Verfahren nach Anspruch 1, wobei das Objekt bei der Abbildung des beleuchteten Objekts direkt dem Luftmedium ausgesetzt wird, ohne Verwendung einer Flüssigkeit mit angepasstem Brechungsindex oder Verwendung einer undurchsichtigen Sprühbeschichtung.

3. Verfahren nach einem der vorhergehenden Ansprüche, wobei das Objekt einen transparenten oder durchscheinenden Kunststoff oder ein Glasmaterial umfasst, wobei das Objekt vorzugsweise aus Kunststoff oder Glas besteht.

4. Verfahren nach einem der vorhergehenden Ansprüche, wobei das Objekt hohl ist und/oder Zylindersymmetrie aufweist.

5. Verfahren nach einem der vorhergehenden Ansprüche, wobei das Objekt Wände mit einer Dicke von weniger als 3 mm umfasst.

6. Verfahren nach einem der vorhergehenden Ansprüche, wobei die Abbildung des beleuchteten Objekts aus verschiedenen Blickwinkeln Folgendes umfasst:
Verwenden einer Kamera, um ein Video oder Bilder des Objekts aufzunehmen;
Verwenden von Drehmitteln, um entweder das Objekt in Bezug auf die Kamera und eine zur Beleuchtung des Objekts verwendete Beleuchtungsquelle zu drehen oder um die Kamera in Bezug auf das Objekt und die Beleuchtungsquelle zu drehen, wobei die Drehmittel vorzugsweise ein Drehtisch sind.

7. Verfahren nach einem der vorhergehenden Ansprüche, ferner umfassend das Skalieren der Spitzenorte unter Verwendung eines kalibrierten Skalierungsfaktors (1054).

8. Verfahren nach einem der vorhergehenden Ansprüche, ferner umfassend das Messen eines bekannten Referenzobjekts, um einen kalibrierten Skalierungsfaktor zu berechnen, der zur Erzeugung der dreidimensionalen optischen Computertomographie-Darstellung des durchscheinenden oder transparenten Objekts verwendet wird.

9. Verfahren nach einem der vorhergehenden Ansprüche, wobei das Verarbeiten der umgekehrten Bilder das Verwenden eines Algorithmus für die Einrichtung eines dreidimensionalen Kegelstrahlscans umfasst.

10. Verfahren nach einem der vorhergehenden Ansprüche, wobei das Bereitstellen des Objekts in der Luft das Bereitstellen des Objekts auf einem Drehtisch umfasst;
das Beleuchten des Objekts in der Luft unter Verwendung einer im Wesentlichen gleichmäßig leuchtenden Fläche, vorzugsweise eines LED-Panels erfolgt;
das Abbilden des beleuchteten Objekts unter Verwendung einer Kamera erfolgt, die auf das Objekt und die leuchtende Oberfläche gerichtet ist und sich in Bezug auf das Objekt gegenüber der leuchtenden Oberfläche befindet, vorzugsweise so, dass die leuchtende Oberfläche das Sichtfeld der Kamera umfasst;
das Abbilden des beleuchteten Objekts aus verschiedenen Blickwinkeln das Verwenden der Kamera umfasst, während das Objekt mit der leuchtenden Oberfläche beleuchtet wird und während das Objekt mit dem Drehtisch gedreht wird.

11. Verfahren nach einem der vorhergehenden Ansprüche, wobei die verschiedenen Blickwinkel innerhalb eines Blickwinkelbereichs von 0 bis 360 Grad oder von 0 bis 180 Grad liegen.

12. Vorrichtung zum Erstellen einer dreidimensionalen Darstellung eines in einem Luftmedium bereitgestellten durchscheinenden oder transparenten Objekts, wobei die Vorrichtung Folgendes umfasst:
- ein Abbildungssystem (2), das dazu konfiguriert ist, das durchscheinende oder transparente Objekt zu beleuchten und das beleuchtete Objekt aus verschiedenen Blickwinkeln abzubilden, wodurch jeweilige Bilder erzeugt werden;
- einen Computer (3), der dazu konfiguriert ist, die Bilder durch Folgendes zu verarbeiten:
- Anwenden einer Farbumkehrung, wodurch umgekehrte Bilder erzeugt werden,
- Verarbeiten der umgekehrten Bilder, um ein dreidimensionales Dichtevolumen zu erzeugen, das Voxel mit jeweiligen Dichtewerten umfasst;
- Entfernen der Voxel aus dem dreidimensionalen Dichtevolumen, deren jeweilige Dichtewerte unter einem Schwellenwert liegen, um die geringe Dichte der Luft zu entfernen, wodurch ein dreidimensionales Dichtevolumen mit Schwellenwert erzeugt wird, das Voxel umfasst;
- Nachverarbeiten des dreidimensionalen Dichtevolumens mit Schwellenwert Voxel für Voxel, um Spitzendichten und entsprechende Spitzenorte zu extrahieren, die die Bereiche der Seitenwand des Objekts darstellen, um eine dreidimensionale optische Computertomographie-Darstellung des Objekts zu erzeugen.

13. Vorrichtung nach Anspruch 12, wobei das Abbildungssystem einen Drehtisch zum Aufnehmen des Objekts darauf und zum Drehen des Objekts umfasst.

14. Vorrichtung nach Anspruch 12 oder 13, wobei das Abbildungssystem eine Beleuchtungsquelle, vorzugsweise ein LED-Panel, zur Beleuchtung des Objekts umfasst.

15. Vorrichtung nach einem der Ansprüche 12-14, wobei das Abbildungssystem eine Kamera umfasst.

16. Vorrichtung nach einem der Ansprüche 12-15, ferner umfassend eine Kammer, in der das Objekt zur Abbildung des Objekts aufgenommen wird.

17. Verwendung einer Vorrichtung nach einem der Ansprüche 12-16 zur dreidimensionalen Darstellung von Kunststoffflaschen, insbesondere in einer Produktionslinie für die Flaschen, oder zur dreidimensionalen Darstellung von Artefakten des Kulturerbes, insbesondere archäologischen Artefakten.

## Revendications

1. Procédé de création d'une représentation tridimensionnelle d'un objet, comprenant :
- la disposition (101) d'un objet translucide ou transparent dans un milieu aérien ;
- l'éclairage (102) de l'objet avec de la lumière qui, lorsqu'elle pénètre dans l'objet, passe à travers celui-ci et en sort, ne se déplace que par l'intermédiaire de l'objet et du milieu aérien ;
- l'imagerie (103) de l'objet éclairé sous différents angles de vue, générant de ce fait des images respectives ;
- le traitement (104) des images par application d'une inversion des couleurs, générant de ce fait des images inversées ;
- le traitement (105) des images inversées pour générer (1051) un volume de densité tridimensionnel, qui comprend des voxels de valeurs de densité respectives ;
- la suppression du volume de densité tridimensionnel des voxels pour lesquels les valeurs de densité respectives sont en dessous d'une valeur seuil afin de supprimer la faible densité de l'air, générant (1052) de ce fait un volume de densité tridimensionnel seuillé qui comprend des voxels ;
- le post-traitement (1053) du volume de densité tridimensionnel seuillé voxel par voxel pour extraire des densités de pic et des emplacements de pic correspondants, qui représentent les zones de la paroi latérale de l'objet afin de générer (105) une représentation par tomographie optique assistée par ordinateur de l'objet.

2. Procédé selon la revendication 1, dans lequel, lors de l'imagerie de l'objet éclairé, l'objet est directement exposé au milieu aérien sans impliquer l'utilisation d'un quelconque liquide d'adaptation de l'indice de réfraction ni l'utilisation d'un quelconque revêtement opaque par pulvérisation.

3. Procédé selon l'une quelconque des revendications précédentes, dans lequel l'objet comprend un plastique transparent ou translucide ou un matériau en verre, l'objet étant de préférence en plastique ou en verre.

4. Procédé selon l'une quelconque des revendications précédentes, dans lequel l'objet est creux et/ou présente une symétrie cylindrique.

5. Procédé selon l'une quelconque des revendications précédentes, dans lequel l'objet comprend des parois d'une épaisseur inférieure à 3 mm.

6. Procédé selon l'une quelconque des revendications précédentes, dans lequel l'imagerie de l'objet éclairé sous différents angles de vue comprend :
l'utilisation d'une caméra pour prendre une vidéo ou des images de l'objet ;
l'utilisation de moyens de rotation pour faire tourner l'objet par rapport à la caméra et à une source d'éclairage utilisée pour éclairer l'objet, ou pour faire tourner la caméra par rapport à l'objet et à la source d'éclairage, les moyens de rotation étant de préférence une table de rotation.

7. Procédé selon l'une quelconque des revendications précédentes, comprenant en outre la mise à l'échelle des emplacements de pic à l'aide d'un facteur de mise à l'échelle calibré (1054).

8. Procédé selon l'une quelconque des revendications précédentes, comprenant en outre la mesure d'un objet de référence connu pour calculer un facteur de mise à l'échelle calibré utilisé pour générer la représentation tridimensionnelle par tomographie optique assistée par ordinateur de l'objet translucide ou transparent.

9. Procédé selon l'une quelconque des revendications précédentes, dans lequel le traitement des images inversées comprend l'utilisation d'un algorithme de configuration de balayage à faisceau conique tridimensionnel.

10. Procédé selon l'une quelconque des revendications précédentes, dans lequel la disposition de l'objet dans l'air comprend la disposition de l'objet sur une table de rotation ;
l'éclairage de l'objet dans l'air est effectué à l'aide d'une surface lumineuse sensiblement uniforme, de préférence un panneau à DEL ;
l'imagerie de l'objet éclairé est effectuée à l'aide d'une caméra qui est pointée sur l'objet et la surface lumineuse, et est placée, par rapport à l'objet, à l'opposé de la surface lumineuse, de préférence de telle sorte que la surface lumineuse englobe le champ de vision de la caméra ;
l'imagerie de l'objet éclairé sous différents angles de vue comprend l'utilisation de la caméra tout en éclairant l'objet avec la surface lumineuse et en faisant tourner l'objet avec la table de rotation.

11. Procédé selon l'une quelconque des revendications précédentes, dans lequel les différents angles de vue se trouvent dans une plage d'angles de vue allant de 0 à 360 degrés ou de 0 à 180 degrés.

12. Appareil de création d'une représentation tridimensionnelle d'un objet translucide ou transparent disposé dans un milieu aérien, l'appareil comprenant :
- un système d'imagerie (2) configuré pour éclairer l'objet translucide ou transparent, et imager l'objet éclairé sous différents angles de vue, générant de ce fait des images respectives ;
- un ordinateur (3) configuré pour traiter les images par :
- l'application d'une inversion des couleurs, générant de ce fait des images inversées,
- le traitement des images inversées pour générer un volume de densité tridimensionnel, qui comprend des voxels de valeurs de densité respectives ;
- la suppression du volume de densité tridimensionnel des voxels pour lesquels les valeurs de densité respectives sont en dessous d'une valeur seuil afin de supprimer la faible densité de l'air, générant de ce fait un volume de densité tridimensionnel seuillé qui comprend des voxels ;
- le post-traitement du volume de densité tridimensionnel seuillé voxel par voxel pour extraire des densités de pic et des emplacements de pic correspondants, qui représentent les zones de la paroi latérale de l'objet afin de générer une représentation tridimensionnelle par tomographie optique assistée par ordinateur de l'objet.

13. Appareil selon la revendication 12, dans lequel le système d'imagerie comprend une table de rotation destinée à recevoir l'objet sur celle-ci et à faire tourner l'objet.

14. Appareil selon la revendication 12 ou 13, dans lequel le système d'imagerie comprend une source d'éclairage, de préférence un panneau à DEL, destinée à éclairer l'objet.

15. Appareil selon l'une quelconque des revendications 12 à 14, dans lequel le système d'imagerie comprend une caméra.

16. Appareil selon l'une quelconque des revendications 12 à 15, comprenant en outre une chambre destinée à recevoir à l'intérieur de celle-ci l'objet pour l'imagerie de l'objet.

17. Utilisation d'un appareil selon l'une quelconque des revendications 12 à 16, pour la représentation en trois dimensions de bouteilles en plastique, en particulier dans une chaîne de production desdites bouteilles, ou pour la représentation en trois dimensions d'objets du patrimoine culturel, en particulier des objets archéologiques.
